Europäisches Patentamt

European Patent Office

Office européen des brevets

(19)

(11) Veröffentlichungsnummer: **0 321 456 B1**

(12) # EUROPÄISCHE PATENTSCHRIFT

(45) Veröffentlichungstag der Patentschrift:
**19.06.91 Patentblatt 91/25**

(51) Int. Cl.$^5$: **C02F 3/02, C02F 3/34, C02F 3/12, C02F 1/40**

(21) Anmeldenummer: **86905385.0**

(22) Anmeldetag: **27.08.86**

(86) Internationale Anmeldenummer:
**PCT/HU86/00046**

(87) Internationale Veröffentlichungsnummer:
**WO 88/01607 10.03.88 Gazette 88/06**

(54) ABBAUVERFAHREN FÜR MINERALÖLDERIVATE IN WASCHWASSER UND SCHLÄMMEN.

(43) Veröffentlichungstag der Anmeldung:
**28.06.89 Patentblatt 89/26**

(45) Bekanntmachung des Hinweises auf die
Patenterteilung:
**19.06.91 Patentblatt 91/25**

(84) Benannte Vertragsstaaten:
**AT BE CH DE FR GB IT LI LU NL SE**

(56) Entgegenhaltungen:
**DE-A- 2 535 803**

(73) Patentinhaber: **PALASTHY, Arpád**
**Csery J. u. 55**
**H-7100 Szekszárd (HU)**

Patentinhaber: **TALLER, Márton**
**Rákoczi u. 854**
**H-7149 Báta (HU)**
Patentinhaber: **RIGLER, István**
**Mérey u. 45**
**H-7100 Szekszárd (HU)**

(72) Erfinder: **PALASTHY, Arpád**
**Csery J. u. 55**
**H-7100 Szekszárd (HU)**
Erfinder: **TALLER, Márton**
**Rákoczi u. 854**
**H-7149 Báta (HU)**
Erfinder: **RIGLER, István**
**Mérey u. 45**
**H-7100 Szekszárd (HU)**

(74) Vertreter: **von Füner, Alexander, Dr. et al**
**Patentanwälte v. Füner, Ebbinghaus, Finck**
**Mariahilfplatz 2 & 3**
**W-8000 München 90 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die erfindung betrifft ein Verfahren zum Abbau von Verschmutzungsstoffen, inbesondere Öl und Fett, von mit Mineralölderivaten, in erster Linie Schmierstoffen und Betriebsstoffen verunreinigtem Waschwasser und Schlämmen auf die Weise, dass das entstehende Material auf die Umgebung nicht mehr schädlich einwirkt. Das erfindungsgemässe Verfahren ist insbesondere vorteilhaft zur kostensparenden und einfach durchzuführenden Behebung der umweltverschmutzenden Wirkung der bei dem Waschen von mit Mineralölderivaten verschmutzten Fahrzeugen und sonstigen Vorrichtungen anfallenden Flüssigkeiten und Ablagerungen von verschiedenen Suspensionen und Emulsionen anwendbar.

Zum Abbau und zur Vernichtung der Verunreinigungen von mit Mineralölderivaten verunreinigten Flüssigkeiten und Ablagerungen sind verschiedene Lösungen bekannt. Ein wirtschaftliches und in der Praxis gut verwendbares Verfahren ist jedoch bisher nicht bekannt geworden.

Bei einem bekannten Verfahren wird der ölhaltige Schlamm in einen lockeren, Sand- oder Lehmboden geleitet und dort bis zum vollständigen Abbau des Öls derart behandelt, dass dabei natürlich auch der aerobe Zustand gesichert wird. Da dieses Verfahren nur für bestimmte Böden verwendbar ist und ein ständiges Umwälzen des Bodens erfordert, kann es nicht als allgemeine Lösung der Aufgabe betrachtet werden (HU-PS 174531).

Ein anderes bekanntes Verfahren ist in der am 28. Juli 1981 im ungarischen Patentblatt Nr. 7 veröffentlichten ungarischen Patentanmeldung 1174/80 beschrieben. Bei diesem Verfahren, dessen Titel "Verfahren zur Umwandlung von z.B. mit Steinöl verunreinigten Böden in Kulturböden" ist, wird das mit Öl verunreinigte Medium mit einer Bakterienkulturgeimpft. Ein Nachteil dieses Verfahrens besteht darin, dass es Kostenaufwendig und infolge der gewünschten Temperaturverhältnisse nur begrenzt anwendbar ist. Ober die gleichen Mängel verfügt auch das aus der HU-PS 181 560 bekannte Verfahren, bei welchem der Temperaturbereich, in welchem das Verfahren durchführbar ist, besonders eng ist.

Ein gemeinsamer Nachteil der erwähnten Verfahren liegt darin, dass die Behandlung im Boden erfolgt und der Boden während dieser zeit nicht benutzbar ist.

Eine weitere Vernichtungsmethode von gefährlichen Abfällen, und somit von Ölschlämmen, besteht in ihrer Verbrennung. Dieses Verfahren kann zum Beispiel bei den Technologien der Ziegelherstellung verwendet werden ; dieses Verfahren ist jedoch sehr umständlich und kostenaufwendig. Ein weiterer Nachteil dieses Verfahrens besteht darin, dass der in den Schlämmen befindliche fruchtbare Boden nicht an seine ursprüngliche Stelle zurückgelangt.

Aus Obigem ist somit ersichtlich, dass es zwar bekannte Verfahren gibt, diese jedoch nur begrenzt anwendbar sind, Verunreinigte Flüssigkeiten und Schlämme entstehen jedoch in standig steigendem Masse.

Die Aufgabe der Erfindung besteht in der Ausarbeitung eines Verfahrens, bei welchem die erwähnten Nachteile beseitigt werden können, die mit den entstehenden Mineralölderivaten verunreinigten gefährlichen Abfälle auf einfache Weise vernichtet und die fruchtbare Erde an ihren Bestimmungsort zur landwirtschaftlichen Nutzung zurückgeführt werden kann.

Bei der Ausarbeitung des erfindungsgemässen Verfahrens wurde von folgender Erkenntnis ausgegangen :
- Schlamm und Waschwasser mit Mineralölgehalt, kann als Energiequelle für Bakterien und Mikroorganismen einen Mähhrstoff bilden,
- die in der Reife befindlichen organischen Dünger (Streu-Stalldünger) sichern für die Bakterien und sonstige Mikroorganismen günstige Lebensbedingungen, und somit geht der Abbauprozess verhältnismässig schnell vonstatten,
- es ist eine bewiesene Tatsache, und darauf weist auch die HU-PS 174 531 hin, dass die im Boden befindlichen Bakterien und sonstigen Mikroorganismen unter aeroben Bedingungen die Mineralölderivate früher oder später abbauen,
- in organischen Düngern sind Bakterien enthalten, welche die Mineralölderivate abbauen,
- die Funktion der Bakterien und sonstiger Mikroorganismen kann mit Zusatzstoffen beschleunigt werden,
- die während des Waschens entstandenen Schlämme und Waschwasser verfügen über einen geringen Schwermetallgehalt, somit muss für dessen Abbau sowie Neutralisierung nicht gesorgt werden.

Das erfindungsgemässe Verfahren dient also zum Abbau von Verunreinigungen von mit Mineralölderivaten, insbesondere Schmierstoffen, Betriebsstoffen verschmutzten Waschwasser und Schlämmen.

Das Wesen der Erfindung liegt darin, dass die mit Mineralölderivaten verunreinigten Waschwasser, Emulsionen, Ablagerungen auf für 5-10 Tage einem Reifungsprozess unterzogenen organischen Dünger aufgebracht und/oder damit vermischt und/ oder gegossen werden, dann als Zusatzstoff ein Gemisch aus N, P, K-haltigem Kunstdünger, Rhyolithtuff und Milchpulver aufgebracht oder damit vermischt, dass weiterhin für die Zeitdauer des Abbauprozesses der aerobe Zustand erhalten und – falls erforderlich – durch Begiessen ein Feuchtigkeitsgehalt von 40-75% gesichert wird.

Bei dem erfindungsgemässen Verfahren ist es vorteilhaft, wenn der Zusatzstoff aus 20-50 Gew.-%, vorzugsweise 40 Gewichtsprozenten aus Rhyolithtuffmahlgut, aus 30-65 Gew.% vorzugsweise 50 Gewichtsprozenten N, P und K-haltigem Kunstdünger und aus 2-15 Gew.%, vorzugsweise 5 Gewichtsprozenten aus Michpulver zusammengestellt wird.

Es ist weiterhin vorteilhaft, wenn bei dem erfindungsgemässen Verfahren die verschiedenen Mineralölderivate vor dem Aufbringen oder Mischen miteinander vermischt homogenisiert werden.

Eine weitere bevorzugte Durchführungsform des erfindungsgemässen Verfahrens ist dadurch gekennzeichnet, dass nach dem Aufbringen oder Mischen noch eine weitere luftdurchlässige Abschlussschicht aufgetragen wird.

Es ist weiterhin vorteilhaft, wenn während des Abbauprozesses eine Temperatur von mindestens 30-50°C gesichert wird und als Abschlussschicht Stroh oder Strohstalldünger oder anderes organisches Material verwendet wird.

Nachstehend wird das erfindungsgemässe Verfahren anhand von bevorzugten Durchführungsbeispielen näher erläutert.

Ein Ölschlamm mit einem Ölgehalt von 3-4% und einem Feuchtigkeitsgehalt von 40-50% wird in einem Betonmischer gemischt und anschliessend auf eine 1,5-2 m dicke, 5-10 Tage lang reifen gelassene Rinder-Streudüngerschicht gleichmässig in einer Dicke von 15-20 cm aufgetragen. Vor dem Auftragen wird 50% des Zusatzstoffes auf die Düngerschicht gestreut, während die weiteren 50% des Zusatzstoffes auf die Schlammschicht derart ausgebreitet werden, dass auf 1 m² 1 kg Zusatzstoff kommt.

In dem vorliegenden Beispiel kam auf 1 m² 2 kg Zusatzstoff, dessen Zusammensetzung folgende war : 50 Gewichtsprozent Kunstdünger, wobei in dem Kunstdünger das Verhältnis von N, $P_2O_5$ und $K_2O$ folgendes war : 8 : 21 : 21, 45 Gewichtsprozente Rhyolithtuffmahlgut und 5% Milchpulver.

Zur Sicherung des als optimal geltenden relativen Feuchtigkeitsgehaltes von 40-75% und einer Temperatur von 3050°C wird als Abdeckung eine rohe Rindermistschicht aus Stroh benutzt. Der aerobe Zustand wird durch Ausbau von Abzügen gesichert.

Bei diesem Ausführungsbeispiel erfolgte der Abbau innerhalb von 5-6 Monaten und es entstand ein für die Umgebung ungefährliches, mit dem Dünger gemeinsam humifiziertes Material, welches entsprechend der Praxis der organischen Düngung in den fruchtbaren Boden gelangt.

Bei der Durchführung des erfindungsgemässen Verfahrens ist es vorteilhaft, das zu vernichtende, verunreinigte Material so vorzubereiten, dass ein Feuchtigkeitsgehalt von mindestens 40% gesichert werden kann und es ist weiterhin zweckmässig, die verschiedenen Mineralölderivate miteinander vermischt auf den organischen Dünger aufzubringen.

Es ist weiterhin vorteilhaft, wenn die bereits mit homogenisierten Mineralölderivaten verunreinigten Schlämme und Waschwasser auf einen mindestens 1 m hohen 5-10 Tage lang reifen gelassenen organischen Düngerschober ausgebreitet oder gegossen werden und der aerobe Zustand durch Aufbringen von luftdurchlässigem Material gesichert wird, z.B. Stroh, Strohmist, halmartige Überbleibsel oder nicht zersetzte zellulosegehaltige Materialien.

Dadurch, dass sich unter dem verunreinigten Schlamm ein 5-10 Tage lang einem Reifungsprozess unterworfener Streudünger befindet, wird die zum Zersetzungsprozess erforderliche Temperatur gesichert. Somit ist es nicht erforderlich, die Temperatur gesondert zu kontrollieren und zu überwachen.

Die Geschwindigkeit hängt im wesentlichen von dem verwendeten Zusatzstoff ab, mit einer grösseren Menge von Zusatzstoff, insbesondere wenn N im Überschuß ist, kann jedoch der Prozess beschleunigt werden.

Der Vorteil des erfindungsgemässen Verfahrens besteht somit darin, dass die Zersetzung verhältnismässig schnell erfolgt, nicht im Boden vor sich geht, sondern gesondert, nach der Zersetzung jedoch das entstandene Material vollständig verwendbar ist. Als besonderer Vorteil des erfindungsgemässen Verfahrens kann noch erwähnt werden, dass dieses Verfahren in den jeweiligen Betrieben leicht und aus eigener Kraft realisiert werden kann, und im weiteren die Lagerung der verunreinigten Schlämme nicht mehr erforderlich ist.

## Ansprüche

1. Verfahren zum Abbau von Verschmutzungsstoffen von mit Mineralölderivaten, insbesondere Schmierstoffen oder Betriebsstoffen, verunreinigten Schlämmen und Waschwasser, **dadurch gekennzeichnet**, dass die mit Mineralölderivaten verunreinigte Waschwasser, Emulsionen, Ablagerungen auf für 5-10 Tage einem Reifungsprozess unterzogenen, organischen Dünger aufgebracht und/oder damit vermischt und/oder gegossen werden, dann als zusatzstoff ein Gemish aus N, P, K-haltigem Kunstdünger, Rhyolithtuff und Milchpulver aufgebracht oder damit vermischt, dass weiterhin für die zeitdauer des Abbauprozesses der aerobe Zustand erhalten und – falls erforderlich – durch Begiessen ein Feuchtigkeitsgehalt von 40-75% gesichert wird.

2. Verfahren nach Anspruch 1, **dadurch gekennzeichnet**, dass der Zusatzstoff aus Rhyolithtuffmahlgut 20-50 Gew.-%, vorzugweise 40 Gewichtsprozenten, N, P, K-haltigem Kunstdünger 30-65 Gew.-%, vorzugsweise 50 Gewichtsprozenten und Milchpulver 2-15 Gew.-%, vorzugweise 5 Gewichtsprozenten zusammengesetzt ist.

3. Verfahren nach Anspruch 1 oder 2, **dadurch gekennzeichnet**, dass die verschiedenen Mineralölderivate vor dem Aufbringen oder Vermischen miteinander vermischt homogenisiert werden.

4. Verfahren nach einem der Ansprüche 1 bis 3, **dadurch gekennzeichnet**, dass nach dem Aufbringen oder Vermischen noch eine weitere luftdurchlässige Abschlussschicht aufgebracht wird.

5. Verfahren nach einem der Ansprüche 1 bis 4, **dadurch gekennzeichnet**, dass während des Abbauprozesses eine Temperatur von mindestens 30-50°C gesichert wird.

6. Verfahren nach einem der Ansprüche 1 bis 5, **dadurch gekennzeichnet**, dass die Abschlussschicht aus Stroh oder mit Stroh versehenen Stalldünger oder aus anderem organischen Stoff gebildet wird.

7. Verfahren nach einem der Ansprüche 1 bis 6, **dadurch gekennzeichnet**, dass als Kunstdünger ein 5-10% N, 15-25% $P_2O_5$ und 15-25% $K_2O$ enthaltender Kunstdünger verwendet wird.

8. Verfahren nach einem der Ansprüche 1 bis 7, **dadurch gekennzeichnet**, dass als Spritzmasse beim Waschen von Milchprodukten entstandenes Waschwasser verwendet wird.

## Claims

1. Method of decomposing pollutants of sludge and washings which have been contaminated with mineral oil derivatives, in particular lubricants or fuels, characterised in that the washings, emulsions, sediments which are contaminated with mineral oil derivatives are applied to and/or mixed with and/or poured onto organic fertiliser, which has been subjected to a maturing process for 5-10 days, then, as an additive, a mixture of artificial fertiliser, containing N, P and K, rhyolite tuff and milk powder is applied or mixed therewith, furthermore the aerobic state is maintained for the duration of the decomposition process, and, if necessary, a degree of moisture of 40-75% is ensured by perfusion.

2. Method as in claim 1, characterised in that the additive is composed of ground rhyolite tuff material 20-50% by weight, preferably 40 percent in weight, artificial fertiliser containing N, P and K 30-65% by weight, preferably 50 percent in weight, and milk powder 2-15% by weight, preferably 5 percent in weight.

3. Method as in claim 1 or 2, characterised in that, prior to application or mixing, the various mineral oil derivatives, mixed with one another, are homogenised.

4. Method as in any of claims 1 to 3, characterised in that, following application or mixing, a further air-permeable cover layer is applied.

5. Method as in any of claims 1 to 4, characterised in that, during the decomposition process, a temperature of at least 30-50°C is ensured.

6. Method as in any of claims 1 to 5, characterised in that the cover layer is formed by straw, or farmyard manure provided with straw, or other organic material.

7. Method as in any of claims 1 to 6, characterised in that the artificial fertiliser used contains 5-10% N, 15-25% $P_2O_5$ and 15-25% $K_2O$.

8. Method as in any of claims 1 to 7, characterised in that washings resulting from the washing of milk products are used as the spray mixture.

## Revendications

1. Procédé pour la décomposition des substances polluantes, notamment d'huiles et de graisses, contenues dans des boues et eaux de lavage souillées par des dérivés d'huiles minérales, en particulier des substances de graissage ou d'entretien, caractérisé en ce que les eaux de lavage, les émulsions et les effluents souillés par les dérivés d'huile minérale sont mis en contact et/ou mélangés et/ou arrosés d'un engrais organique ayant été soumis à un processus de maturation pendant 5 à 10 jours, en ce qu'ils sont ensuite en tant qu'additifs ajoutés ou mélangés à un mélange d'engrais artificiel contenant N, P, K, de tuf de rhyolithe et de poudre de lait, si bien que le caractère aérobie est maintenu en continuité pendant la durée du procédé de décomposition et, le cas échéant, est assuré par arrosage à un pourcentage d'humidité entre 40 et 75%.

2. Procédé selon la revendication 1, caractérisé en ce que ledit additif contient, exprimé en pourcentage pondéral, de 20 à 50%, de préférence 40%, de rhyolithe moulue, de 30 à 65%, de préférence 50%, d'engrais artificiel contenant N, P, K, de 2 à 15%, de préférence 5%, de poudre de lait.

3. Procédé selon la revendication 1 ou 2, caractérisé en ce que les différents dérivés d'huile minérale sont préalablement à leur introduction ou leur mélange mélangés entre eux.

4. Procédé selon la revendication 1 à 3, caractérisé en ce qu'après introduction ou mélange, on dépose encore une couche d'arrêt supplémentaire perméable à l'air.

5. Procédé selon l'une des revendications 1 à 4, caractérisé en ce que, pendant le processus de décomposition, on assure une température d'au moins 30 à 50°C.

6. Procédé selon l'une des revendications 1 à 5, caractérisé en ce que la couche d'arrêt est formée de paille ou fumier ou toute autre matière organique.

7. Procédé selon l'une des revendications 1 à 6, caractérisé en ce que l'engrais artificiel employé est un engrais artificiel contenant 5 à 10% de N, 15 à 25% de $P_2O_5$, 15 à 25% de $K_2O$.

8. Procédé selon l'une des revendications 1 à 7, caractérisé en ce que la masse d'aspersion employée lors du lavage est de l'eau résultant du lavage des produits laitiers.